Europäisches Patentamt

European Patent Office

Office européen des brevets

(11) Publication number: **0 286 151**
**A2**

## (12) EUROPEAN PATENT APPLICATION

(21) Application number: **88200434.4**

(22) Date of filing: **08.03.88**

(51) Int. Cl.4: **F16C 33/72**

(30) Priority: **10.04.87 IT 5322387 U**

(43) Date of publication of application:
**12.10.88 Bulletin 88/41**

(84) Designated Contracting States:
**DE FR GB SE**

(71) Applicant: **RIV-SKF OFFICINE DI VILLAR PEROSA S.p.A**
**Via Mazzini 53**
**I-10123 Torino(IT)**

(72) Inventor: **Colanzi, Franco**
**Piazza Rivoli n. 7**
**I-10100 Torino(IT)**
Inventor: **Vignotto, Angelo**
**Via Montevideo n. 6**
**I-10100 Torino(IT)**

(74) Representative: **Lotti, Giorgio**
**c/o Ing. Barzano' & Zanardo S.p.A. Via Cernaia 20**
**I-10122 Torino(IT)**

(54) Seal for bearings of the hubs of vehicle wheels.

(57) A seal for bearings of the hubs of vehicle wheels comprises a central body (14) rigidly connected to a metal insert (15) driven onto the outer race (11) of the bearing; extending from the body is a projection (16) which is compressed on the outer race to form a static seal thereon; also extending from the body (14) are: a dirt guard lip (17) which creates a labyrinth seal with the toroidally shaped surface (21) of the inner race (10), and three lips (18, 19 and 20) which provide a dynamic seal on said surface (21); the outer lips (18) and (19) are oriented towards the outside of the bearing in order to exploit the centrifugal effect deriving during the operation from the rotation of the toroidally shaped surface (21), whilst the inner lip (20) skims said surface (21) during the operation.

Fig. 2

## SEAL FOR BEARINGS OF THE HUBS OF VEHICLE WHEELS

The invention refers to a seal for bearings of the hubs of vehicle wheels.

Recent generations of bearings applied to the hubs of the wheels offer very good operating performance, but these types are rather expensive so it is opportune to equip them with seals that ensure a sealing as safe as possible against infiltration of external agents like water, dirt, mud, to which the elements on which bearings are assembled are constantly subjected.

Such seals, at the moment, though having at least two sealing lips, are designed so that such lips become easily worn-out and/or do not ensure a sufficient sealing in every operating condition of the bearing as the lips are not always correcty oriented and are not pressing on the surface of the element on which the sealing must be exerted.

Purpose of the invention is to overcome the above mentioned inconveniences and to propose a seal performing a better sealing both of static type (on the outer race) and of dynamic type (on the inner race), having such an orientation of the relating lips to improve the said sealing and to elongate the life of the seal and consequently of the same bearing also during very heavy operating conditions.

For these and other purposes which will be better appreciated as the description follows, the invention proposes to realize a seal for the hubs of vehicle wheels of the type including a central body, equipped with a seating recess for a spring, from which an appendix is extended, rigidly connected to a metal insert driven onto the outer ring of the bearing characterized in that from the appendix a lip stretches out forming static seal against the outer ring of the bearing, whilst two further lips stretch out of the body to form dynamic seal against the external surface of the inner ring; such lips are oriented towards the outside of the bearing so as to have a double protection against the external polluting agents.

A description of the seal according to the invention will now follow, and reference will be made to the enclosed drawings:

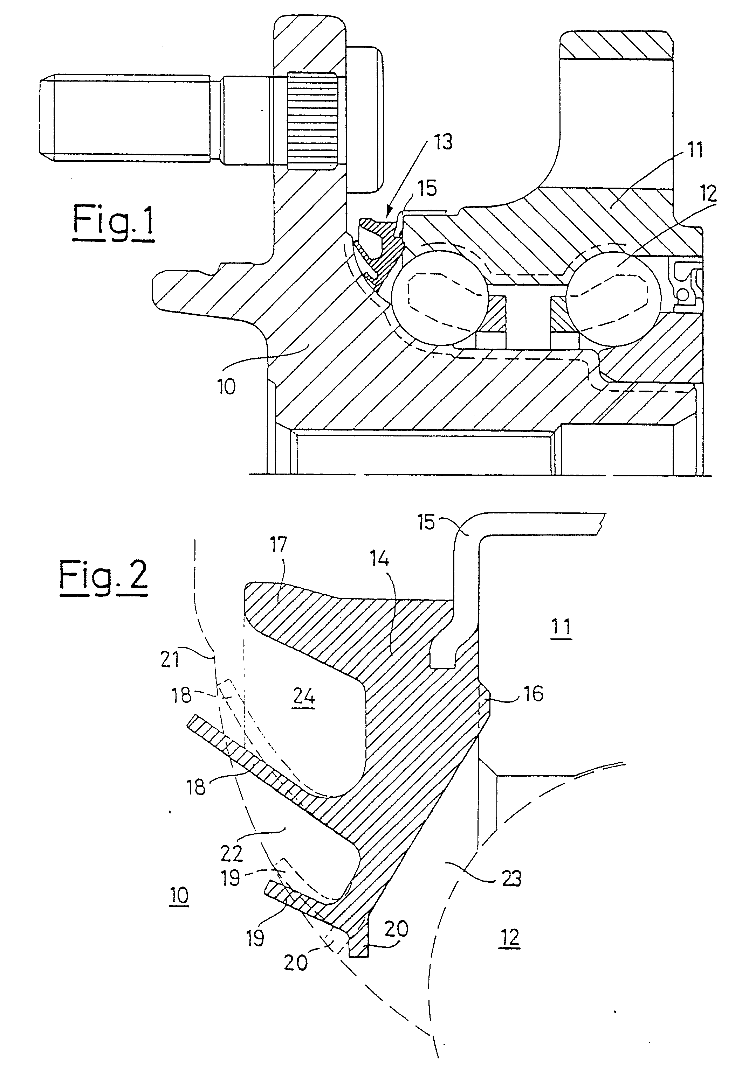

Figure 1 is the partial sectional view of a bearing for a hub of vehicle wheel embodying the seal subject of the invention;

Figure 2 is the enlarged view of the seal of Fig. 1: the rest position is illustrated by full line and the operating position on the elements on which its lips perform a seal is illustrated by hatched line.

In a bearing for the hub of vehicle wheel which comprises a generally rotating inner race 10, a generally non rotating outer race 11 and two ball crowns retained by cages 12, the seal 13 according to the invention is being assembled interposed between such races.

The elements 10, 11 and 12 which constitute the rolling bearing are not described in detail as these are not the subject of the invention; in the drawings they are illustrated with shapes and dimensions which are merely examples, as they can take any other configuration according to the utilization without modifying the purposes and advantages of the invention. The seal 13 has a central body 14 to which a traditional spring 15 is applied in the known way.

From body 14 an appendix 16 is extending, applied on the end 17 of a metal insert 18 which is, in turn, forcefully driven on a proper surface of the outer race 11, so as to ensure a good attachment of the said seal.

A lip 19 is extending from appendix 16 having the task of ensuring the static seal with the outer race 11, as it will be examined successively.

Two further appendixes 20 and 21 are extending from the central body; both of them are equipped respectively with a main lip 2 and with an outer lip 23 to realize the dynamic seal of the bearing on surface 24 of the inner race 10.

Finally, a small edge 25 enables to ensure the correct positioning of the spring 15 in the seat of the body 14 and to protect the same spring from the surrounding dirt.

As already mentioned, the lip 19 avoids that the infiltration of external agents between the insert 18 and the race 11 reach the inside of the bearing, and stops them in the opening 26.

On the contrary, lips 22 and 23, which perform the real dynamic seal, as they slide on the surface 24 during the rotation of the inner race 10, are designed in such a way that during the sliding they always tend to orient themselves towards the outside of the bearing, so as to give a great sealing against outer agents like water, mud, dirt.

Furthermore, the centrifugal effect is being exploited: this is determined by the surface 24 on which the lips of the toroidally shaped seal slide to increase both the centrifugal effect and the structural resistance of the inner race. In this way, the outer agents are being induced to run off the inner part of the bearing rather than penetrate into it.

The outer lip 23 is also designed extended to ensure a good flexibility to the seal to compensate possible disalignments during manufacture or during operations.

An opening 27 is located between the outer lip 23 and the main lip 22; this opening may be filled with grease so as keep the main lip well lubricated and therefore subject to less rubbing friction against surface 24.

## Claims

1. Seal for bearings of the hubs of the vehicle wheels of the type comprising a central body (14), equipped with a seating recess for a spring (15), from which an appendix is extending (16) rigidly connected to a metal insert (18) driven on the outer race (11) of the bearing characterized in that from the appendix (16) a lip (19) is extending which forms a static seal against the outer race of the bearing, whilst two further lips (22 and 23) are extending from the body (14) to form dynamic seal against the toroidally shaped surface (24) of the inner race (10); such lips (22) and (23) are oriented towards the outside of the bearing so as to exploit the centrifugal effect deriving during the operation from the rotation of the said surface (24).

2. Seal according to claim 1 characterized in that between the lips (22 and 23) and the surface (24) on which they form a seal, a grease-containting opening (27) is located.

3. Seal according to claim 1 characterized in that the lip (22), called main lip, is opposed to the spring (15), whilst the lip (23), called outer lip, is placed sidewise with respect to the spring (15) and opposite to the appendix (16).

4. Seal according to claim 3 characterized in that between the spring (15) and the outer lip (23) a small edge is extending (25) which enlarges the seating recess for the spring (15).

## Fig.1

## Fig.2